# FASCICULE DE BREVET EUROPEEN

(11) **EP 3 781 459 B1**
(45) Date de publication et mention de la délivrance du brevet: **30.11.2022**
(21) Numéro de dépôt: 19719578.7
(22) Date de dépôt: 03.04.2019
(51) Int. Cl.: B62D 21/11, B62D 21/15

(54) **CORNE POUR BERCEAU D'UN VÉHICULE AUTOMOBILE**
RAHMENHORN FÜR EINE WIEGE EINES KRAFTFAHRZEUGS
FRAME HORN FOR A CRADLE OF A MOTOR VEHICLE

(30) Priorité: 16.04.2018 FR 1853289
(43) Date de publication de la demande: 24.02.2021
(73) Titulaire: PSA Automobiles SA, 78300 Poissy (FR)
(72) Inventeur: LE GUILLOU, Olivier, 25420 COURCELLES LES MONTBELIARD (FR); GALMICHE, Jean Pierre, 25490 DAMPIERRE LES BOIS (FR); KONDRATOFF, Axel, 25150 DAMBELIN (FR)
(86) Numéro de dépôt international: PCT/FR2019/050769
(87) Numéro de publication internationale: WO 2019/202230

(56) Documents cités:
- WO-A1-2007/116167
- WO-A1-2012/038659
- WO-A1-2014/095124
- FR-A1- 2 984 838

## Description

L'invention a trait aux berceaux de réception d'un moteur de véhicule automobile et plus particulièrement à la fixation de différentes pièces au berceau et à la rigidité de l'ensemble.

Les véhicules automobiles comprennent généralement un berceau pour recevoir un moteur du véhicule automobile. Le berceau fait partie d'un élément structurel comprenant différentes pièces assurant, entre autre, la fixation à une caisse du véhicule, la fixation d'accessoires ou encore la fixation d'un train avant.

Cet élément structurel est l'un des premiers éléments du véhicule automobile à être impacté lors d'un choc frontal total ou partiel. La résistance de l'élément structurel est donc primordiale pour protéger les occupants du véhicule automobile.

Le document FR3050427A1 et FR2984838 décrit un élément structurel mécanosoudé comprenant un berceau, deux allonges et deux cornes disposées de part et d'autres du berceau fixant les allonges sur le berceau. L'élément structurel comprend également une pièce soudée au berceau pour la fixation des triangles de suspension et des renforts soudés entre les cornes et le berceau.

Un tel élément structurel permet effectivement d'obtenir une résistance à un choc frontal importante. Cependant, la fabrication de cet élément structurel, par soudage, est longue, compliquée, couteuse et nécessite un grand nombre de pièces ayant de fortes épaisseurs.

Or, une attention particulière doit être portée à la conception de l'élément structurel dans un souci d'allègement du véhicule automobile afin de réduire la consommation de ce dernier et de réduire la quantité de matière première nécessaire à la fabrication du véhicule automobile.

L'objectif est de proposer une alternative à un tel élément structurel allégeant le véhicule automobile, simplifiant son montage et réduisant les coûts tout en assurant une résistance suffisante lors d'un choc frontal total ou partiel.

A cet effet, il est proposé, en premier lieu, un élément structurel de véhicule automobile, l'élément structurel comprenant :
- un berceau de réception d'un moteur du véhicule automobile ;
- deux allonges disposées de part et d'autre du berceau ;
- deux cornes disposées de part et d'autre du berceau, chaque corne comportant :
   - un corps principal,
   - un premier moyen de fixation de ladite corne sur le berceau,
   - un deuxième moyen de fixation de l'élément structurel à la caisse du véhicule automobile,
   - un bras comportant une base et faisant saillie du corps principal depuis la base, le bras comportant, en une extrémité opposée à la base, le deuxième moyen de fixation,
   - un troisième moyen de fixation de ladite corne et d'une des allonges ;
chaque corne comprenant un quatrième moyen de fixation solidarisant ladite corne et un triangle de suspension du véhicule automobile.

Un tel élément de structure réduit le nombre de pièce facilitant le montage du véhicule, améliore la résistance du véhicule automobile tout en diminuant le poids de celui-ci et ainsi diminue le coût de production des véhicules automobiles.

Diverses caractéristiques supplémentaires peuvent être prévues, seules ou en combinaison :
- chaque corne comprend un cinquième moyen de fixation solidarisant ladite corne et une barre stabilisatrice du véhicule automobile réduisant encore le nombre de pièce de sorte à faciliter le montage du véhicule, améliorant également la résistance du véhicule automobile tout en diminuant le poids de celui-ci et ainsi diminuant le coût de production des véhicules automobiles ;
- le premier moyen de fixation de chaque corne comprend un premier trou traversant de part en part le corps principal de ladite corne améliorant la fixation des cornes sur le berceau et augmentant ainsi la résistance et la rigidité de l'élément structurel ;
- le premier moyen de fixation de chaque corne comprend un premier trou borgne réalisé dans la base du bras de ladite corne améliorant la fixation des cornes sur le berceau et augmentant ainsi la résistance et la rigidité de l'élément structurel ;
- chaque corne comprend deux pattes en saillie du corps principal de ladite corne, chaque patte du quatrième moyen de fixation comprenant un quatrième trou réduisant le nombre de pièces de l'élément structurel de sorte à diminuer le temps et le coût de montage ;
- le troisième moyen de fixation et le cinquième moyen de fixation de chaque corne comprennent, respectivement, deux troisièmes trous et deux cinquièmes trous, les troisièmes trous et les cinquièmes trous traversant de part en part le corps principal de ladite corne augmentant la résistance et la rigidité de l'élément structurel ;
- le berceau comprend une partie supérieure et une partie inférieure prenant en sandwich chaque corne au niveau du premier trou traversant du premier moyen de fixation et au niveau du cinquième moyen de fixation augmentant la résistance et la rigidité de l'élément structurel ;
- chaque allonge comprend un élément supérieur et un élément inférieur prenant en sandwich chaque corne au niveau du troisième moyen de fixation augmentant la résistance et la rigidité de l'élément structurel ;
- la corne est monobloc et fabriquée en fonte d'aluminium augmentant la résistance et la rigidité de l'élément structurel.

Il est proposé, en second lieu, un véhicule automobile comprenant une caisse et un élément structurel tel que décrit précédemment, l'élément structurel étant fixé à la caisse du véhicule automobile.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue schématique de dessus d'un véhicule automobile lors d'un choc frontal partiel, le véhicule automobile comprenant un élément structurel ;
- la figure 2 est une vue schématique en perspective de l'élément structurel en cours d'assemblage ;
- la figure 3 est une vue schématique en perspective d'une partie de l'élément structurel centrée sur une corne ;
- la figure 4 est une vue schématique en perspective de l'élément structurel assemblé, d'une barre stabilisatrice et d'un triangle de suspension fixés sur l'élément structurel.

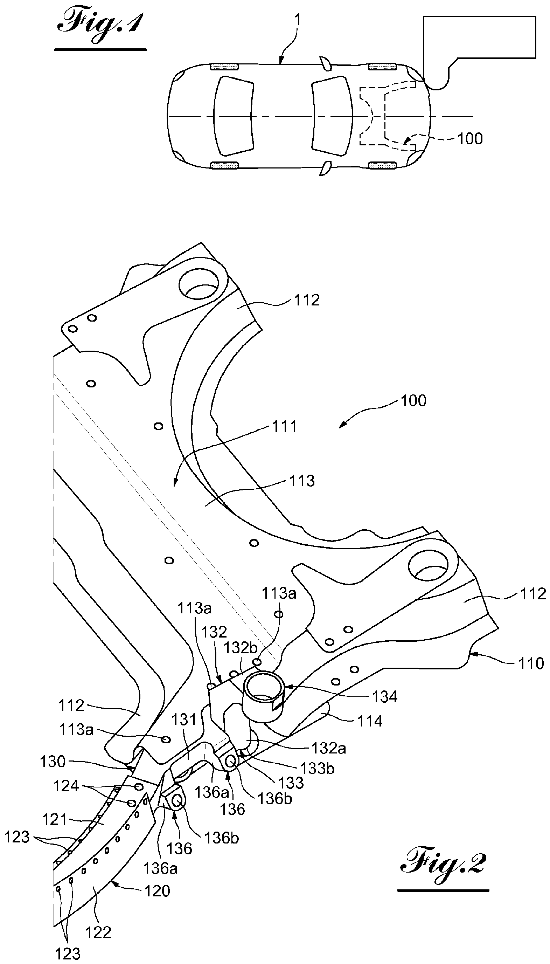

La figure 1 représente un véhicule 1 automobile lors d'un choc frontal partiel. La résistance du véhicule 1 automobile, et plus particulièrement d'un élément 100 structurel disposé à l'avant du véhicule 1 automobile, doit être suffisante pour protéger les occupants du véhicule 1 automobile lors d'un choc frontal partiel ou total.

L'élément 100 structurel est configuré pour solidariser, par exemple, un moteur, des accessoires tels qu'un radiateur ou une batterie, un train avant et/ou une caisse du véhicule 1 automobile.

Comme représenté sur la figure 2, l'élément 100 structurel comprend un berceau 110 apte à recevoir le moteur, des allonges 120 et des cornes 130 solidarisant les allonges 120 au berceau 110.

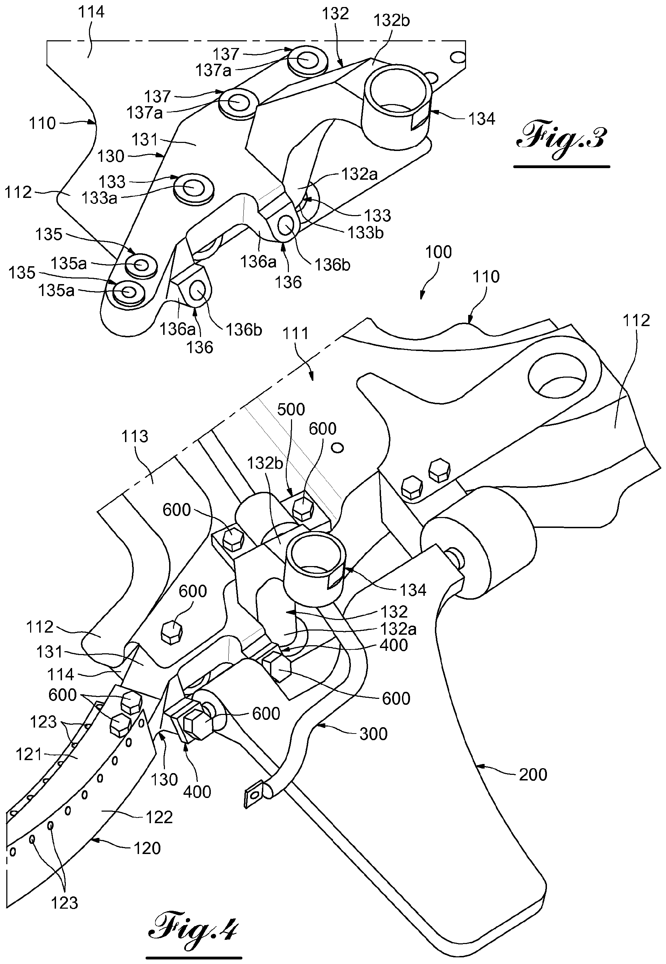

Les figures 2 et 4 ne représentent l'élément 100 structurel qu'en partie, ce dernier étant, dans le mode de réalisation représenté, sensiblement symétrique.

Selon le mode de réalisation représenté, le berceau 110 comprend une traverse 111 centrale et quatre extensions 112 s'étendant sensiblement parallèlement à un même plan, à deux bouts de la traverse 111 centrale, conférant une forme générale en H au berceau 110.

Selon le mode de réalisation représenté, le berceau 110 comprend une partie 113 supérieure et une partie 114 inférieure solidaires. La partie 113 supérieure et la partie 114 inférieure sont, de préférence, fabriquées à partir de tôles de sorte à alléger l'élément 100 structurel.

Tout au long de ce texte les termes « inférieur » et « supérieur » ne sont présents qu'à titre indicatif et ne confèrent aucune limitation quant à la disposition des pièces.

Deux des extensions 112 s'étendant d'un même côté de la traverse 111 centrale du berceau 110 sont prolongées par les allonges 120.

Dans le mode de réalisation représenté, chaque allonge 120 présente une forme sensiblement arquée. Chaque allonge comprend un élément 121 supérieur et un élément 122 inférieur. L'élément 121 supérieur et l'élément 122 inférieur définissant, conjointement, une forme creuse. L'élément 121 supérieur et l'élément 122 inférieur sont solidarisés, de préférence, par le biais de points 123 de soudure. L'élément 121 supérieur et l'élément 122 inférieur sont, de préférence, fabriqués à partir de tôles de sorte à alléger l'élément 100 structurel.

Lesdites allonges 120 sont fixées sur le berceau 110 par le biais des cornes 130, chaque corne étant disposée entre le berceau 110 et une des allonges 120.

Dans le mode de réalisation illustré, chaque corne 130 comprend un corps 131 principal et un bras 132 en saillie du corps 131 principal, comme illustré sur la figure 3.

Le corps 131 principal s'étend, de préférence, sensiblement parallèlement à un plan.

Le bras 132 comporte une base 132a, solidaire du corps 131 principal, à partir de laquelle s'étend le bras 132. Selon le mode de réalisation représenté, le bras 132 s'étend suivant une direction sensiblement perpendiculaire au plan parallèlement auquel s'étend le corps 131 principal. Le bras 132 présente, de préférence, une forme arquée.

Chaque corne 130 comprend également un premier moyen 133 de fixation pour fixer ladite corne 130 sur le berceau 110.

Dans le mode de réalisation illustré, le premier moyen 133 de fixation comprend un premier trou 133a traversant. Le premier trou 133a traversant est disposé sur le corps 131 principal de chaque corne 130 et traverse de part en part celui-ci.

Le premier moyen 133 de fixation comprend un premier trou 133b borgne (non visible sur les dessins). Le premier trou 133b borgne est disposé au niveau de la base 132a du bras 132 de chaque corne 130. Le premier trou 133b borgne est, de préférence, ouvert d'un côté opposé au bras 132 par rapport au corps 131 principal.

Chaque corne 130 comprend un deuxième moyen 134 de fixation pour fixer l'élément 100 structurel sur la caisse du véhicule 1 automobile.

Selon le mode de réalisation représenté, le deuxième moyen 134 de fixation est disposé sur le bras 132 de chaque corne 130. Le deuxième moyen 134 de fixation est, de préférence, disposé à une extrémité 132b du bras 132 opposée à la base 132a.

Chaque corne 130 comprend un troisième moyen 135 de fixation pour fixer une des allonges 120 sur ladite corne 130.

Selon le mode de réalisation représenté, le troisième moyen 135 de fixation comprend deux troisièmes trous 135a. De préférence, les troisièmes trous 135a traversent de part en part le corps 131 principal de chaque corne 130.

Les premier, deuxième et troisième moyens 133,134,135 de fixation assurent une rigidification importante de la liaison entre les allonges 120 et le berceau 110 et entre l'élément 100 structurel et la caisse du véhicule 1 automobile.

Chaque corne 130 comprend un quatrième moyen 136 de fixation pour fixer une pièce sur l'élément 100 structurel. Dans le mode de réalisation représenté sur la figure 4, le quatrième moyen 136 de fixation permet de rendre solidaire un triangle 200 de suspension et l'élément 100 structurel.

Le quatrième moyen 136 de fixation permet de réduire le nombre pièce au montage pour diminuer le temps et le coût du montage ainsi qu'améliorer la rigidité de l'élément 100 structurel.

Selon le mode de réalisation illustré, le quatrième moyen 136 de fixation comprend deux pattes 136a en saillie du corps 131 principal. Chaque patte 136a comprend, de préférence un quatrième trou 136b.

Dans le mode réalisation illustré, chaque corne 130 comprend un cinquième moyen 137 de fixation pour fixer une autre pièce sur l'élément 100 structurel. Dans le mode de réalisation représenté sur la figure 4, le cinquième moyen 137 de fixation permet de rendre solidaire une barre 300 stabilisatrice et l'élément 100 structurel.

Le cinquième moyen 137 de fixation permet également de réduire le nombre pièce au montage pour diminuer le temps et le coût du montage ainsi qu'améliorer la rigidité de l'élément 100 structurel.

Le cinquième moyen 137 de fixation comprend, de préférence, deux cinquièmes trous 137a traversant de part en part le corps 131 principal de chacune des cornes 130.

Comme illustré sur les figures 2 et 4, dans le mode de réalisation représenté, les cornes 130 sont disposées en sandwich entre la partie 113 supérieure et la partie 114 inférieure du berceau 110. Des perçages 113a réalisés dans la partie 113 supérieure coopèrent avec le premier trou 133a traversant du premier moyen 133 de fixation et avec les cinquièmes trous 137a du cinquième moyen 137 de fixation. Des perçages (non visibles sur les figures) réalisés dans la partie 114 inférieure coopèrent avec les premiers trous 133a,133b du premier moyen 133 de fixation et avec les cinquièmes trous 137a du cinquième moyen 137 de fixation.

La rigidité de la fixation entre les cornes 130 et le berceau 110 est ainsi accrue. L'épaisseur de la partie 113 supérieure et de la partie 114 inférieure est faible afin de gagner en masse.

Comme illustré sur les figures 2 et 4, dans le mode de réalisation représenté, chaque corne 130 est disposée en sandwich entre l'élément 121 supérieur et l'élément 122 inférieur d'une des allonges 120. Des perçages 124 réalisés dans l'élément 121 supérieur et dans l'élément 122 inférieur coopèrent avec les troisièmes trous 135a du troisième moyen 135 de fixation.

La rigidité de la fixation entre les cornes 130 et les allonges 120 est ainsi accrue. L'épaisseur de l'élément 121 supérieur et de l'élément 122 inférieur est faible afin de gagner en masse.

Selon le mode de réalisation illustré, les quatrièmes trous 136b du quatrième moyen 136 de fixation et les cinquièmes trous 137a du cinquième moyen 137 de fixation coopèrent, respectivement, avec une attache 400 du triangle 200 de suspension et avec une attache 500 de la barre 300 stabilisatrice.

Dans un mode de réalisation préféré, représenté sur la figure 4, les différentes pièces de l'élément 100 structurel sont assemblées par le biais de vis ou de boulons 600.

Les cornes 130 sont, de préférence, monobloc. Les cornes 130 sont, selon un mode de réalisation préféré, fabriquées en fonte d'aluminium. Les cornes 130 permettent ainsi d'alléger l'élément 100 structurel, d'améliorer sa résistance à un choc frontal total ou partiel ainsi que de réduire le nombre de pièces comprises dans l'élément 100 structurel de sorte à accélérer, simplifier et donc réduire les coûts liés à l'assemblage de l'élément 100 structurel.

Le dimensionnement des cornes 130 permet d'assurer le passage des efforts, entre les allonges 120 et le berceau 110, lors d'un choc frontal total ou partiel de sorte à réduire un coût lié à une augmentation de la résistance du berceau 110.

## Revendications

1. Elément (100) structurel de véhicule (1) automobile, l'élément (100) structurel comprenant :
- un berceau (110) de réception d'un moteur du véhicule (1) automobile ;
- deux allonges (120) disposées de part et d'autre du berceau (110) ;
- deux cornes (130) disposées de part et d'autre du berceau (110), chaque corne (130) comportant :
• un corps (131) principal,
• un premier moyen (133) de fixation de ladite corne (130) sur le berceau (110),
• un deuxième moyen (134) de fixation de l'élément (100) structurel à la caisse du véhicule (1) automobile,
• un bras (132) comportant une base (132a) et faisant saillie du corps (131) principal depuis la base (132a), le bras (132) comportant, en une extrémité (132b) opposée à la base (132a), le deuxième moyen (134) de fixation,
• un troisième moyen (135) de fixation de ladite corne (130) et d'une des allonges (120) ;
l'élément (100) structurel étant **caractérisé en ce que** chaque corne (130) comprend un quatrième moyen (136) de fixation solidarisant ladite corne (130) et un triangle (200) de suspension du véhicule (1) automobile.

2. Elément (100) structurel selon la revendication précédente, **caractérisé en ce que** chaque corne (130) comprend un cinquième moyen (137) de fixation solidarisant ladite corne (130) et une barre (300) stabilisatrice du véhicule (1) automobile.

3. Elément (100) structurel selon l'une quelconque des revendications précédentes, **caractérisé en ce que** le premier moyen (133) de fixation de chaque corne (130) comprend un premier trou (133a) traversant de part en part le corps (131) principal de ladite corne (130).

4. Elément (100) structurel selon l'une quelconque des revendications précédentes, **caractérisé en ce que** le premier moyen (133) de fixation de chaque corne (130) comprend un premier trou (133b) borgne réalisé dans la base (132a) du bras (132) de ladite corne (130).

5. Elément (100) structurel selon l'une quelconque des revendications précédentes, **caractérisé en ce que** chaque corne (130) comprend deux pattes (136a) en saillie du corps (131) principal de ladite corne (130), chaque patte (136a) du quatrième moyen (136) de fixation comprenant un quatrième trou (136b).

6. Elément (100) structurel selon l'une quelconque des revendications 2 à 5, **caractérisé en ce que** le troisième moyen (135) de fixation et le cinquième moyen (137) de fixation de chaque corne (130) comprennent, respectivement, deux troisièmes trous (135a) et deux cinquièmes trous (137a), les troisièmes trous (135a) et les cinquièmes trous (137a) traversant de part en part le corps (131) principal de ladite corne (130).

7. Elément (100) structurel selon l'une quelconque des revendications 2 à 6, **caractérisé en ce que** le berceau (110) comprend une partie (113) supérieure et une partie (114) inférieure prenant en sandwich chaque corne (130) au niveau du premier moyen (133) de fixation et au niveau du cinquième moyen (137) de fixation.

8. Elément (100) structurel selon l'une quelconque des revendications précédentes, **caractérisé en ce que** chaque allonge (120) comprend un élément (121) supérieur et un élément (122) inférieur prenant en sandwich chaque corne (130) au niveau du troisième moyen (135) de fixation.

9. Elément (100) structurel selon l'une quelconque des revendications précédentes, **caractérisé en ce que** la corne (130) est monobloc et fabriquée en fonte d'aluminium.

10. Véhicule (1) automobile comprenant une caisse et un élément (100) structurel selon l'une quelconque des revendications précédentes, l'élément (100) structurel étant fixé à la caisse du véhicule (1) automobile.

## Patentansprüche

1. Strukturelement (100) für ein Kraftfahrzeug (1), wobei das Strukturelement (100) umfasst:
- eine Wiege (110) zur Aufnahme eines Motors des Kraftfahrzeugs (1);
- zwei Verlängerungen (120), die beiderseits der Wiege (110) angeordnet sind;
- zwei Hörner (130), die beiderseits der Wiege (110) angeordnet sind, wobei jedes Horn (130) umfasst:
o einem Hauptkörper (131),
o ein erstes Mittel (133) zur Befestigung des Horns (130) an der Wiege (110),
o ein zweites Mittel (134) zur Befestigung des Bauteils (100) an der Karosserie des Kraftfahrzeugs (1),
o einen Arm (132) mit einer Basis (132a), der von der Basis (132a) aus vom Hauptkörper (131) vorsteht, wobei der Arm (132) an einem der Basis (132a) gegenüberliegenden Ende (132b) das zweite Befestigungsmittel (134) aufweist,
o ein drittes Mittel (135) zur Befestigung des Horns (130) und einer der Verlängerungen (120);
Das Strukturelement (100) ist **dadurch gekennzeichnet, dass** jedes Horn (130) ein viertes Befestigungsmittel (136) umfasst, das das Horn (130) und ein Dreieck (200) zur Aufhängung des Kraftfahrzeugs (1) miteinander verbindet.

2. Strukturelement (100) nach dem vorhergehenden Anspruch, **dadurch gekennzeichnet, dass** jedes Horn (130) ein fünftes Befestigungsmittel (137) umfasst, das das Horn (130) und eine Stange (300), die das Kraftfahrzeug (1) stabilisiert, miteinander verbindet.

3. Strukturelement (100) nach einem der vorhergehenden Ansprüche, **dadurch gekennzeichnet, dass** das erste Mittel (133) zum Befestigen jedes Horns (130) ein erstes Loch (133a) umfasst, das den Hauptkörper (131) des Horns (130) durchquert.

4. Strukturelement (100) nach einem der vorhergehenden Ansprüche, **dadurch gekennzeichnet, dass** das erste Mittel (133) zum Befestigen jedes Horns (130) ein erstes Sackloch (133b) umfasst, das in der Basis (132a) des Arms (132) des Horns (130) ausgebildet ist.

5. Strukturelement (100) nach einem der vorhergehenden Ansprüche, **dadurch gekennzeichnet, dass** jedes Horn (130) zwei Laschen (136a) aufweist, die von dem Hauptkörper (131) des Horns (130) vorstehen, wobei jede Lasche (136a) des vierten Befestigungsmittels (136) ein viertes Loch (136b) aufweist.

6. Strukturelement (100) nach einem der Ansprüche 2 bis 5, **dadurch gekennzeichnet, dass** die dritten Befestigungsmittel (135) und die fünften Befestigungsmittel (137) jedes Horns (130) jeweils zwei dritte Löcher (135a) und zwei fünfte Löcher (137a) umfassen, wobei die dritten Löcher (135a) und die fünften Löcher (137a) den Hauptkörper (131) des Horns (130) durchqueren.

7. Strukturelement (100) nach einem der Ansprüche 2 bis 6, **dadurch gekennzeichnet, dass** die Wiege (110) einen oberen Abschnitt (113) und einen unteren Abschnitt (114) umfasst, der jedes Horn (130) an dem ersten Befestigungsmittel (133) und an dem fünften Befestigungsmittel (137) sandwichartig umschließt.

8. Strukturelement (100) nach einem der vorhergehenden Ansprüche, **dadurch gekennzeichnet, dass** jede Verlängerung (120) ein oberes Element (121) und ein unteres Element (122) umfasst, das jedes Horn (130) an der dritten Befestigungseinrichtung (135) sandwichartig umschließt.

9. Strukturelement (100) nach einem der vorhergehenden Ansprüche, **dadurch gekennzeichnet, dass** das Horn (130) einstückig ist und aus Aluminiumguss hergestellt ist.

10. Kraftfahrzeug (1) mit einer Karosserie und einem Strukturelement (100) nach einem der vorhergehenden Ansprüche, wobei das Strukturelement (100) an der Karosserie des Kraftfahrzeugs (1) befestigt ist.

## Claims

1. A structural element (100) of a motor vehicle (1), the structural element (100) comprising:
- a cradle (110) for receiving an engine of the motor vehicle (1);
- two extensions (120) disposed on either side of the cradle (110);
- two horns (130) disposed on either side of the cradle (110), each horn (130) comprising:
o a main body (131),
o a first means (133) for fixing said horn (130) to the cradle (110),
o a second means (134) for fixing the structural element (100) to the body of the motor vehicle (1),
o an arm (132) having a base (132a) and projecting from the main body (131) from the base (132a), the arm (132) having, at an end (132b) opposite the base (132a), the second fastening means (134),
o a third means (135) for fastening said horn (130) and one of the extensions (120);
the structural element (100) being **characterized in that** each horn (130) comprises a fourth fastening means (136) connecting said horn (130) and a suspension triangle (200) of the motor vehicle (1).

2. Structural element (100) according to the preceding claim, **characterized in that** each horn (130) comprises a fifth fastening means (137) fastening said horn (130) and a stabilizing bar (300) of the motor vehicle (1).

3. A structural member (100) according to any one of the preceding claims, **characterized in that** the first means (133) for fixing each horn (130) comprises a first hole (133a) passing right through the main body (131) of said horn (130).

4. A structural member (100) according to any one of the preceding claims, **characterized in that** the first means (133) for fixing each horn (130) comprises a first blind hole (133b) made in the base (132a) of the arm (132) of said horn (130).

5. A structural member (100) according to any one of the preceding claims, **characterized in that** each horn (130) comprises two lugs (136a) projecting from the main body (131) of said horn (130), each lug (136a) of the fourth fixing means (136) comprising a fourth hole (136b).

6. A structural element (100) according to any one of claims 2 to 5, **characterized in that** the third fixing means (135) and the fifth fixing means (137) of each horn (130) comprise, respectively, two third holes (135a) and two fifth holes (137a), the third holes (135a) and the fifth holes (137a) passing right through the main body (131) of said horn (130).

7. A structural member (100) according to any one of claims 2 to 6, **characterized in that** the cradle (110) comprises an upper portion (113) and a lower portion (114) sandwiching each horn (130) at the first fastening means (133) and at the fifth fastening means (137).

8. A structural member (100) according to any preceding claim, **characterized in that** each extension (120) comprises an upper member (121) and a lower member (122) sandwiching each horn (130) at the third fastening means (135).

9. Structural element (100) according to any one of the preceding claims, **characterized in that** the horn (130) is integral and made of cast aluminum.

10. A motor vehicle (1) comprising a body and a structural element (100) according to any one of the preceding claims, the structural element (100) being fixed to the body of the motor vehicle (1).
